# EUROPÄISCHE PATENTSCHRIFT

(11) **EP 3 161 898 B1**
(45) Veröffentlichungstag und Bekanntmachung des Hinweises auf die Patenterteilung: **29.04.2020**
(21) Anmeldenummer: 15727994.4
(22) Anmeldetag: 11.06.2015
(51) Int. Cl.: H01M 10/625, H01M 10/615, H01M 10/647, H01M 10/6556, H01M 10/6571, H01M 10/613

(54) **ÜBERGANGSVORRICHTUNG FÜR EINE ENERGIESPEICHERVORRICHTUNG UND VERFAHREN ZUR HERSTELLUNG EINER ENERGIESPEICHERVORRICHTUNG**
TRANSITION DEVICE FOR AN ENERGY STORAGE DEVICE AND METHOD FOR PRODUCING AN ENERGY STORAGE DEVICE
DISPOSITIF DE TRANSITION POUR UN DISPOSITIF DE STOCKAGE D'ÉNERGIE ET UN PROCÉDÉ DE FABRICATION D'UN DISPOSITIF DE STOCKAGE D'ÉNERGIE

(30) Priorität: 24.06.2014 DE 102014212105
(43) Veröffentlichungstag der Anmeldung: 03.05.2017
(73) Patentinhaber: Mahle International GmbH, 70376 Stuttgart (DE)
(72) Erfinder: HEEG, Oliver, 71701 Schwieberdingen (DE); HIRSCH, Stefan, 70180 Stuttgart (DE); JANZEN, Caroline, 70192 Stuttgart (DE); WIEBELT, Achim, 67435 Neustadt (DE)
(74) Vertreter: Grauel, Andreas
(86) Internationale Anmeldenummer: PCT/EP2015/063029
(87) Internationale Veröffentlichungsnummer: WO 2015/197369

(56) Entgegenhaltungen:
- EP-A1- 2 667 076
- EP-A2- 2 362 463
- WO-A1-2011/061931
- WO-A1-2012/165493
- DE-A1-102011 084 002
- DE-A1-102012 018 048

## Beschreibung

### Technisches Gebiet

Die Erfindung betrifft eine Energiespeichervorrichtung, welche mindestens einen Energiespeicher und mindestens einen Temperiereinrichtung aufweist, insbesondere für ein Kraftfahrzeug, insbesondere nach dem Oberbegriff von Anspruch 1. Weiterhin betrifft die Erfindung ein Verfahren zur Herstellung einer Energiespeichervorrichtung.

Energiespeichervorrichtungen mit einem Energiespeicher, der in Stapeln angeordnete Zellen aufweist, werden in modernen Hybrid-Elektro-Fahrzeugen (HEV) oder Elektrofahrzeugen (EV) zur Speicherung von elektrischer Energie eingesetzt. Als leistungsfähige Energiespeicher werden beispielsweise Li-lonen-Akkumulatoren oder NiMH-Akkumulatoren oder Super-Caps verwendet. In der Energiespeichervorrichtung kann schnelles Laden und Entladen aufgrund von Widerständen in und außerhalb der Zellen zu einem Temperaturanstieg in einzelnen Zellen führen und damit zu einer Erwärmung der gesamten Energiespeichervorrichtung. Es kann hierbei auch eine ungleichmäßige Erwärmung der einzelnen Zellen herbeigeführt werden. Die Temperatur in den Zellen sollte aber 50°C nicht übersteigen, da Temperaturen über 50°C die Zellen des Energiespeichers dauerhaft schädigen könnten. Deshalb ist es notwendig, die Zellen der Energiespeichervorrichtung zu kühlen, insbesondere aktiv zu kühlen. Bei geringen Außentemperaturen hingegen ist es notwendig, die Energiespeichervorrichtung zu beheizen, um eine minimale Arbeitstemperatur der Zellen des Energiespeichers zu erreichen. Für eine hohe Lebensdauer und eine maximale Leistung des Energiespeichers wird in modernen Energiespeichervorrichtungen typischerweise eine Temperiereinrichtung verwendet, um sowohl eine Kühlung als auch eine Heizung der Zellen zu realisieren. Hierbei ist es insbesondere notwendig sicherzustellen, dass die Zellen der Energiespeichervorrichtung in jedem Betriebszustand auf im Wesentlichen derselben Temperatur liegen und eine möglichst homogene Verteilung der Temperatur über alle Zellen der Energiespeichervorrichtung vorliegt. Zum Temperieren der Zellen weist die Temperiereinrichtung typischerweise eine Temperierplatte auf, die in thermischem Kontakt mit den Zellen steht.

Aus der EP 2 362 463 B1 ist eine Energiespeichervorrichtung mit einer Vielzahl von Batteriezellen bekannt. Die Batteriezellen sind in einem Batteriestapel angeordnet und stehen mit einer Kühlplatte in thermischem Kontakt. Als Übergangsvorrichtung ist zwischen den Batteriezellen und der Kühlplatte eine thermische Isolationsschicht angeordnet, um eine gleichmäßige Temperaturverteilung innenhalb eines Batteriezellenstapels zu realisieren. Auch aus WO 2012/165493 A1, WO 2011/061931 A1, DE 10 2012 018 048 A1 und EP 2 667 076 A1 sind solche Energiespeichervorrichtungen bekannt.

### Darstellung der Erfindung, Aufgabe, Lösung, Vorteile

Es ist die Aufgabe der vorliegenden Erfindung, eine verbesserte Energiespeichervorrichtung und ein Verfahren zur Herstellung einer Energiespeichervorrichtung zu schaffen.

Die Aufgabe wird mit einer Energiespeichervorrichtung mit den Merkmalen von Anspruch 1 gelöst. Die Aufgabe zum Verfahren wird mit den Merkmalen von Anspruch 13 gelöst.

Ein Ausführungsbeispiel betrifft eine Energiespeichervorrichtung, welche mindestens einen Energiespeicher und mindestens eine Temperiereinrichtung aufweist und einen thermischen Übergang zwischen der Temperiereinrichtung und dem Energiespeicher bewirkt, insbesondere für ein Kraftfahrzeug, mit einer Übergangsvorrichtung, wobei die Übergangsvorrichtung zwischen dem Energiespeicher und der Temperiereinrichtung angeordnet ist, wobei die Übergangsvorrichtung zumindest eine erste inkompressible Schicht aufweist, welche als Toleranzausgleichsschicht dient. Die Toleranzausgleichsschicht bewirkt eine Optimierung des Wärmeüberganges zwischen den technisch rauen Oberflächen der Temperiereinrichtung und des Energiespeichers, insbesondere einer Temperierplatte als Temperiereinrichtung und einer Endplatte oder eines Bodens des Energiespeichers.

Die erste inkompressible Schicht, kann durch das Rauigkeitsprofil bedingte Zwischenräume ausfüllen, Unebenheiten in den Kontaktflächen der Temperierplatte und/oder der Endplatte ausgleichen und damit als Toleranzübergangsschicht dienen. Insgesamt kann somit eine vergrößerte reale thermische Kontaktfläche realisiert werden. Dadurch kann der Wärmeübergangswiderstand zwischen dem Energiespeicher und der Temperiereinrichtung verringert werden. Dies kann zu einem verbesserten Wärmeübergang zwischen der Temperiereinrichtung und dem Energiespeicher führen. Die erste inkompressible Schicht kann somit eine optimierte thermische Kontaktierung sicherstellen. Die erste inkompressible Schicht kann durch die inkompressible Eigenschaft bevorzugt eine sichere und gleichbleibende Kontaktierung realisieren. Die erste inkompressible Schicht ist bevorzugt blasenfrei und weist keine kompressiblen Blasen auf, wie dies von herkömmlichen Toleranzausgleichsschichten bekannt ist. Die erste inkompressible Schicht kann gleichzeitig eine Verklebung der Komponenten Temperiereinrichtung oder Temperierplatte und Energiespeicher oder Endplatte bzw. Boden des Energiespeichers realisieren.

Der Energiespeicher kann eine Batterie, ein Akkumulator, wie beispielsweise ein Li-lonen- oder NiMH-Akkumulator, oder ein Super-Cap sein. Der Energiespeicher kann hierbei mehrere Zellen umfassen. Die Zellen sind beispielsweise auf einer Endplatte oder Boden angeordnet, die bzw. der der Temperiereinrichtung gegenüberliegend angeordnet ist. Der Energiespeicher kann zum Betrieb eines Hybrid-Elektro-Fahrzeugs (HEV) oder eines Elektrofahrzeugs (EV) geeignet sein. Die Temperiereinrichtung kann eine Temperierplatte aufweisen oder sein, die als Wärmequelle oder Wärmesenke fungieren kann. Die Temperiereinrichtung kann somit zur Erwärmung oder Kühlung des Energiespeichers eingesetzt werden. Die Temperiereinrichtung ist in einem bevorzugten Ausführungsbeispiel in Form einer Temperierplatte ausgeführt und kann einen oder mehrere Strömungskanäle zum Führen bzw. Durchströmen eines Fluids, wie beispielsweise eines Kühlmittels, aufweisen. Die Übergangsvorrichtung ist somit eine thermische Übergangsvorrichtung. Sie ist geeignet, eine flächige Verbindung zwischen der Temperiereinrichtung und dem Energiespeicher herzustellen. Die thermische Übergangsvorrichtung kann auch zwischen einer Oberfläche der Temperiereinrichtung und einer Oberfläche einer zusätzlich angeordneten Heizvorrichtung angeordnet sein. Somit kann die Übergangsvorrichtung unterhalb der Temperierplatte angeordnet werden, z.B. wenn sich die Heizvorrichtung unterhalb der Temperierplatte befindet.

Die erste inkompressible Schicht weist ein ausgehärtetes Material auf. Aushärtbare Materialien werden bevorzugt in einer temporär fließfähigen, insbesondere flüssigen oder viskosen, Phase auf die zu kontaktierenden Flächen aufgetragen, härten durch chemische Reaktion aus und bilden danach einen imkompressiblen festen Film auf den Kontaktflächen aus. Nach einem Aushärtprozess kann das Material in eine feste, erste inkompressible Schicht umgewandelt werden, welche die Temperiereinrichtung und den Energiespeicher oder die Endplatte oder den Boden des Energiespeichers stoffschlüssig oder formschlüssig verbindet. Die erste Schicht ist, da sie als temporär fließfähige Substanz als Schicht aufgetragen wird, bereits inkompressibel. Durch den Aushärtprozess entsteht eine, bevorzugt dreidimensionale, Vernetzung der Komponenten des Materials und es entsteht eine glasartige Schicht, die inkompressibel ist. Hierbei kann die erste inkompressible Schicht ein einkomponentiges Material, ein zweikomponentiges Material oder ein mehrkomponentiges Material aufweisen. Die Materialien können beispielsweise durch Temperaturerhöhung oder durch chemische Aktivierung vernetzen und damit aushärten. Bevorzugt können die aushärtbaren Substanzen zwei Bauteile, beispielsweise die Temperierplatte und die Endplatte des Energiespeichers verbinden. Die Verbindung kann hierbei bevorzugt eine stoffschlüssige oder formschlüssige Verbindung sein. Die Verbindung kann hierbei lösbar oder unlösbar sein.

Die erste inkompressible Schicht kann bevorzugt einen Duroplast aufweisen oder komplett aus einem Duroplast bestehen. Ein Duroplast wird auch als Duromer bezeichnet und ist ein Kunststoff, der nach dem Aushärten nicht mehr verformbar ist. Somit kann der Duroplast die erste inkompressible Schicht ausbilden. Als Duroplast kann beispielsweise ein Aminoplast oder ein Phenoplast verwendet werden. Ferner können Epoxidharze, vernetzte Polyacrylate und/oder Polyurethane verwendet werden. Die erste inkompressible Schicht der Übergangsvorrichtung weist dabei bevorzugt einen glasartigen Polymerwerkstoff auf, der über chemische Hauptvalenzverbindungen dreidimensional fest vernetzt ist. Bevorzugt weist die erste inkompressible Schicht ein Gießharz auf. Das Gießharz kann hierbei ein Zweikomponenten-Gießharz sein, insbesondere ein Zweikomponenten-Polyurethan als Material enthalten.

Die erste inkompressible Schicht weist eine Wärmeleitfähigkeit zwischen 1 und 3,5 W/mK auf. Die Wärmeleitfähigkeit der ersten inkompressiblen Schicht kann die Kühlung, beispielsweise des Energiespeichers, insbesondere die erforderliche Kühlleistung, beeinflussen. Bei gleicher Schichtdicke ist eine große Wärmeleitfähigkeit durch einen kleinen Wärmewiderstand gekennzeichnet. Die Wärmeleitfähigkeit ist hierbei umgekehrt proportional zu dem Wärmewiderstand. Je geringer hierbei der Wärmewiderstand der ersten Schicht ist, desto geringer ist der zur Kühlung erforderliche Temperaturgradient.

In einem bevorzugten Ausführungsbeispiel weist die Übergangsvorrichtung eine zweite Schicht auf, welche als thermische Isolationsschicht dient. Die zweite Schicht weist hierbei bevorzugt ein thermisches Isolationsmaterial auf, das eine geringe Wärmeleitfähigkeit aufweist. Durch die geringe Wärmeleitfähigkeit des Isolationsmaterials kann der Wärmewiderstand der thermischen Isolationsschicht mittels einer gezielten Verteilung des Isolationsmaterials über die thermische Isolationsschicht in bestimmten Bereichen erhöht werden. Die thermische Isolationsschicht kann ein ungleichmäßig über eine Haupterstreckungsrichtung der zweiten Schicht verteiltes Isolationsmaterial aufweisen. Ungleichmäßig verteilt kann in Bezug auf die thermische Isolationsschicht bedeuten, dass die Materialstärke des Isolationsmaterials und somit der gesamten thermischen Isolationsschicht über eine Haupterstreckungsfläche der thermischen Isolationsschicht variiert. Auf diese Weise kann die thermische Isolationsschicht unterschiedliche Dicken aufweisen. Eine Materialstärke des Isolationsmaterials kann in einem oder mehreren Bereichen der thermischen Isolationsschicht im Wesentlichen gleich Null sein. In diesem Fall kann die thermische Isolationsschicht in dem Bereich oder in den Bereichen kein Isolationsmaterial umfassen. Somit kann auch eine Dicke der thermischen Isolationsschicht in dem Bereich oder den Bereichen gleich Null sein. Die thermische Isolationsschicht kann aus einem starren oder in Bezug auf eine zwischen dem Energiespeicher und der Temperiereinrichtung herrschenden Anpresskraft inkompressiblen Material bestehen. Die thermische Isolationsschicht kann aber auch aus einem zumindest partiell kompressiblen Material bestehen.

Bevorzugt weist die zweite Schicht eine Materialstärke zwischen 50 µm und 300 µm, insbesondere von 150 um auf. Isolationsschichten dieser Materialstärke sind beispielsweise mittels Siebdruck herstellbar.

Die Wärmeleitfähigkeit der zweiten Schicht beträgt bevorzugt zwischen 0,05 und 0,6 W/mK, insbesondere 0,2 W/mK. Hierbei kann die Materialstärke der Isolationsschicht je nach dem Wärmeleitkoeffizient des Isolationsmaterials gewählt werden. Je schlechter die Wärmeleitfähigkeit ist, desto dünner kann die Isolationsschicht sein.

In einer Ausführungsform der Übergangsvorrichtung weist die zweite Schicht einen ersten Bereich mit einem ersten mittleren Wärmewiderstand und einen zweiten Bereich mit einem zweiten mittleren Wärmewiderstand auf, wobei der erste Wärmewiderstand ungleich dem zweiten Wärmewiderstand ist. Somit weist die zweite Schicht Bereiche unterschiedlichen Wärmewiderstandes auf, mittels denen die in dem Energiespeicher entstehende Wärme gleichmäßig verteilt abgeführt werden kann. Bevorzugt weist die zweite Schicht einen ersten Bereich mit einer ersten Materialstärke und einen zweiten Bereich mit einer zweiten Materialstärke auf, wobei die erste Materialstärke ungleich der zweiten Materialstärke ist. Somit kann der Wärmewiderstand mittels unterschiedlicher Dicken der zweiten Schicht angepasst werden.

Besonders vorteilhaft ist es, wenn der Übergang von einem ersten Bereich zu einem zweiten Bereich kontinuierlich verändert oder abgestuft erfolgt. So kann ein allmählicher Übergang oder ein schlagartiger Übergang vorgesehen sein.

Auch ist es vorteilhaft, wenn der Wärmewiderstand der Isolationsschicht entlang oder quer zu einer Haupterstreckungsrichtung der Temperiereinrichtung zunimmt oder abnimmt. Dadurch kann der Wärmewiderstand und damit die Beheizung oder die Kühlung gezielt gesteuert werden.

Weiterhin ist es zweckmäßig, wenn der Wärmewiderstand abschnittweise durch den Flächenanteil der thermischen Isolationsschicht relativ zu einem Temperiereinrichtungsoberflächenabschnitt vorgegeben ist.

Weiterhin ist es vorteilhaft, wenn die Temperiereinrichtung eine elektrische Heizschicht aufweist, die benachbart zu der ersten Schicht oder zu der zweiten Schicht angeordnet ist.

Auch ist es vorteilhaft, wenn die Temperiereinrichtung zumindest einen Strömungskanal zur Durchströmung eines Fluids aufweist.

Bevorzugt sind die erste inkompressible Schicht und/oder die zweite Schicht mittels Siebdruckverfahren auf die Temperiereinrichtung oder auf die Temperierplatte aufgebracht. Siebdruck ist ein anzuwendendes Verfahren, bei dem temporär flüssige Materialien auf Oberflächen aufgebracht werden können.

Entsprechend ist es besonders vorteilhaft, wenn die Temperiereinrichtung eine Temperierplatte ist.

Auch ist es vorteilhaft, wenn die erste inkompressible Schicht und die zweite Schicht auf einer Oberfläche der Temperiereinrichtung oder der Temperierplatte aufgebracht sind.

Weiterhin ist es bevorzugt, wenn die erste Schicht auf der Oberfläche der Temperiereinrichtung aufgebracht ist und die zweite Schicht auf der ersten Schicht aufgebracht ist und/oder dass die zweite Schicht auf der Oberfläche der Temperiereinrichtung aufgebracht ist und die erste Schicht auf der zweiten Schicht aufgebracht ist.

Die Aufgabe zur Energiespeichervorrichtung wird auch mit einer Energiespeichervorrichtung mit einem Energiespeicher und einer Temperiereinrichtung gelöst, wobei zwischen dem Energiespeicher und der Temperiereinrichtung eine erfindungsgemäße Übergangsvorrichtung nach einem der Ansprüche 1 bis 13 angeordnet ist. Die Übergangsvorrichtung weist bevorzugt eine erste inkompressible Schicht auf, welche als Toleranzausgleichsschicht dient. Hierbei können Rauigkeiten mit Hügel und Tälern, die durch die technischen Oberflächen der Temperiereinrichtung und/oder der Zellen des Energiespeichers bedingt sind, ausgeglichen werden, so dass eine maximal große thermische Kontaktfläche ausgebildet ist. Die thermische Kontaktfläche ist nach der Aushärtung der aushärtbaren Substanzen der ersten Schicht inkompressibel und bildet eine formschlüssige Verbindung zwischen Temperiereinrichtung und Energiespeicher aus. Hierbei haben die Erfinder festgestellt, dass Duroplaste, als glasartige Polymere eine erste inkompressible Schicht mit einem optimalen Wärmeübergang herstellen können.

Die Übergangsvorrichtung kann hierbei auch eine Anordnung aus mehreren funktionalen Schichten bilden, welche es ermöglichen, den thermischen Widerstand zwischen der Temperiereinrichtung und der Oberfläche des Energiespeichers gezielt zu beeinflussen. Hierdurch kann eine maximale Temperaturdifferenz an einer Oberfläche des Energiespeichers, beispielsweise einer Batteriezelle, über die Zeit möglichst gering gehalten werden. Dadurch kann beispielsweise eine Batteriekühlplatte mit einem lokal angepassten thermischen Interface, auch LaThln genannt, realisiert werden.

Dadurch ist es nicht mehr erforderlich, eine Temperierplatte, beispielsweise eine Kühlplatte, zur Temperierung eines Energiespeichers mit einem entsprechend hohen Kühlmittelvolumenstrom zu bedienen, so dass der Temperaturgradient im Kühlmittel gering gehalten wird und der Energiespeicher oder Zellen des Energiespeichers homogen gekühlt werden können. Verändert sich der thermische Widerstand der Anordnung aus mehreren funktionalen Schichten entlang einer Strömungsrichtung des Kühlmittels, so kann der Kühlmittelvolumenstrom gering gehalten werden, da ein Temperaturgradient im Kühlmittel durch den sich verändernden thermischen Widerstand ausgeglichen werden kann. Indem ein hoher Volumenstrom vermieden werden kann, treten geringe Druckverluste im System auf, so dass die weiteren Komponenten im Kreislauf kleiner dimensioniert werden können. So können zum Beispiel kleine, leichte und kostengünstige Pumpen im Kühlmittelkreislauf der Temperiereinrichtung eingesetzt werden.

Außerdem kann auf eine komplexe Verspannvorrichtung, welche den Energiespeicher mit der Temperiereinrichtung gleichmäßig verspannt, verzichtet werden. Dadurch können Inhomogenitäten im Anpressdruck, die den thermischen Widerstand beeinflussen, ausgeglichen werden. Je höher der Anpressdruck, desto höher der thermische Widerstand und desto besser wird der Energiespeicher gekühlt. Verändert sich also aufgrund von Inhomogenitäten in der Verspannung der thermische Widerstand der Anordnung, können die Unterschiede im thermischen Widerstand durch die Einbringung mehrerer funktionaler Schichten ausgeglichen werden. Dadurch kann auch auf zusätzliche, komplexe Elemente für die Verspannung verzichtet werden.

Vorteilhafterweise kann durch die Übergangsvorrichtung mit den funktionalen Schichten eine homogene Kühlung bzw. Heizung eines Energiespeichers realisiert werden. Weist der Energiespeicher mehrere Zellen auf, so kann gewährleistet werden, dass alle Zellen in jedem Betriebszustand auf etwa dem gleichen Temperaturniveau liegen.

Die thermische Isolationsschicht als zweite Schicht kann benachbart zu der Toleranzausgleichsschicht als erste Schicht angeordnet sein. Die thermische Isolationsschicht und die Toleranzausgleichsschicht können stapelförmig angeordnet sein und direkt aneinander angrenzen. Somit kann sich die Toleranzausgleichsschicht auch über Bereiche der thermischen Isolationsschicht erstrecken, die eine maximale Materialstärke des Isolationsmaterials aufweisen. Durch die benachbarte Anordnung können Toleranzen der thermischen Isolationsschicht gut durch die Toleranzausgleichsschicht ausgeglichen werden.

Die thermische Isolationsschicht kann einen ersten Bereich mit einer ersten Materialstärke, einen zweiten Bereich mit einer zweiten Materialstärke und einen dritten Bereich mit einer dritten Materialstärke aufweisen. Dabei kann der zweite Bereich zwischen dem ersten und dem dritten Bereich angeordnet sein. Die erste Materialstärke kann größer als die zweite Materialstärke sein und die zweite Materialstärke kann größer als die dritte Materialstärke sein.

Auch kann zum Beispiel die Materialstärke des dritten Bereiches dünner als die Materialstärke des ersten Bereiches sein. Der erste Bereich, der zweite Bereich und der dritte Bereich können entlang einer Strömungsrichtung oder einer Strömungsweglänge eines Fluids innerhalb der Temperierplatte angeordnet sein. Auch können der erste Bereich, der zweite Bereich und der dritte Bereich parallel zu einer Strömungsrichtung oder einer Strömungsweglänge des Fluids innerhalb der Temperierplatte angeordnet sein, wenn Unterschiede im Anpressdruck auszugleichen sind. Der erste Bereich kann dabei in Bezug auf die Strömungsrichtung stromaufwärts und der dritte Bereich in Bezug auf die Strömungsrichtung stromabwärts angeordnet sein. Die Strömungsrichtung kann beispielsweise für einen Kühlbetrieb der Temperierplatte gelten. Die Materialstärke kann sich zwischen einer maximalen Materialstärke in dem ersten Bereich und einer minimalen Materialstärke in dem dritten Bereich kontinuierlich verringern. Dabei ist es nicht erforderlich, dass sich die Materialstärke immer kontinuierlich bzw. linear verringert. Die Verringerung der Materialstärke kann auch exponentiell sein. Oder, wie vorstehend beschrieben, kann es auch sein, dass zum Beispiel der dritte Bereich wieder eine größere Dicke aufweist als der zweite Bereich. Auf diese Weise können unterschiedliche Wärmewiderstände der thermischen Übergangsvorrichtung durch unterschiedliche Dicken der thermischen Isolationsschicht realisiert werden.

Die thermische Isolationsschicht kann einen ersten Abschnitt und einen zweiten Abschnitt aufweisen. Dabei kann das Isolationsmaterial ausschließlich in dem ersten Abschnitt angeordnet sein. In dem zweiten Abschnitt ist somit kein Isolationsmaterial vorhanden. Die Dicke der thermischen Isolationsschicht kann in dem zweiten Abschnitt gleich Null betragen. In dem ersten Abschnitt kann die thermische Isolationsschicht das Isolationsmaterial in einer konstanten oder einer veränderlichen Materialstärke aufweisen. Die Toleranzausgleichsschicht kann in den zweiten Abschnitt hineinragen. Die Toleranzausgleichsschicht kann sowohl eine Mehrzahl erster Abschnitte als auch eine Mehrzahl zweiter Abschnitte aufweisen. Der erste Abschnitt kann durch eine Mehrzahl von Aussparungen in dem zweiten Abschnitt gebildet sein, oder umgekehrt. Die Aussparungen können beispielsweise rund, oval, rechteckig, dreieckig, sechseckig oder streifenförmig sein. Eine Größe oder ein Durchmesser der Mehrzahl von Aussparungen kann sich entlang der Strömungsrichtung verändern. Die ersten und die zweiten Abschnitte können in der Strömungsrichtung oder quer zur Strömungsrichtung abwechselnd angeordnet sein. Ein Flächenanteil des ersten Abschnitts in Bezug zu einem Flächenanteil des zweiten Abschnitts an der thermischen Isolationsschicht kann sich entlang der Strömungsrichtung verändern. Die Veränderung kann auch parallel dazu sein, beispielsweise wenn Unterschiede im Anpressdruck auszugleichen sind. Auf diese Weise können unterschiedliche Wärmewiderstände der thermischen Übergangsvorrichtung über das Vorhandensein und Nichtvorhandensein des Isolationsmaterials innerhalb der thermischen Isolationsschicht realisiert werden.

Die Übergangsvorrichtung kann eine Heizschicht aufweisen. Die Heizschicht kann benachbart zu der Toleranzausgleichsschicht oder benachbart zu der thermischen Isolationsschicht angeordnet sein. Die Übergangsvorrichtung kann somit einen stapelförmigen Aufbau aufweisen, der zumindest die Toleranzausgleichsschicht, die Isolationsschicht und die Heizschicht umfasst.

Durch einen Betrieb der Heizschicht kann die thermische Übergangsvorrichtung erwärmt werden. Die Heizschicht kann ausgebildet sein, um elektrische Energie in Wärme umzuwandeln. Je nach Ausführungsform der Heizschicht kann die Heizschicht zusätzlich oder alternativ ausgebildet sein, um die Übergangsvorrichtung zu kühlen. Beispielsweise kann die Heizschicht Heizwiderstände oder Peltier-Elemente umfassen.

Bei einer Energiespeichervorrichtung ist es weiterhin vorteilhaft, wenn die Übergangsvorrichtung zwischen dem Boden des Energiespeichers und der Temperiereinrichtung angeordnet ist.

Bei einer Energiespeichervorrichtung ist es auch vorteilhaft, wenn die Temperiereinrichtung eine Temperierplatte ist, welche der Temperierung der Energiespeichervorrichtung dient.

Bei einer Energiespeichervorrichtung ist es auch vorteilhaft, wenn der Energiespeicher ein Akkumulator oder eine Batterie ist.

Die Aufgabe zum Verfahren wird ferner mit einem Verfahren zur Herstellung einer Energiespeichervorrichtung gelöst, welches die Schritte aufweist:
- Anordnen einer Temperiereinrichtung, insbesondere einer Temperierplatte, beabstandet zu einer Endplatte eines Energiespeichers;
- Auftragen einer ersten inkompressiblen Schicht aus einer aushärtbaren Substanz auf die Temperierplatte oder die Endplatte;
- Aushärten der ersten inkompressiblen Schicht.

Ferner kann das Verfahren den Schritt: Anordnen einer zweiten Schicht, die als thermische Isolationsschicht dient, vor dem Aushärten, aufweisen.

Das Aushärten kann hierbei mittels Wärmzufuhr, also bei höheren Temperaturen, insbesondere exotherm, erfolgen. Das Aushärten kann aber auch bei Raumtemperatur chemisch, insbesondere isotherm, aktiviert sein. Hierbei wird der Prozess des Vernetzens des aushärtbaren Materials durch zugemischte Katalysatoren aktiviert werden. Außerdem kann die Aushärtung auch mittels Strahlung aktiviert werden. Bei dem Aushärtprozess können sich bevorzugt lineare Kettenmoleküle bilden, die sich untereinander dreidimensional vernetzen können und so eine stabile Struktur bilden können. Nach dem Aushärten kann sich diese Struktur nicht mehr verändern und somit ist die Schicht dauerhaft inkompressibel.

Weitere vorteilhafte Ausgestaltungen sind durch die nachfolgende Figurenbeschreibung und durch die Unteransprüche beschrieben.

### Kurze Beschreibung der Figuren der Zeichnungen

Nachstehend wird die Erfindung auf Grundlage zumindest eines Ausführungsbeispiel anhand der Figuren der Zeichnung erläutert. Es zeigen in schematischer Darstellung:
- Fig. 1: eine Energiespeichervorrichtung;
- Fig. 2: eine weitere Ausführungsform einer Energiespeichervorrichtung.

### Bevorzugte Ausführung der Erfindung

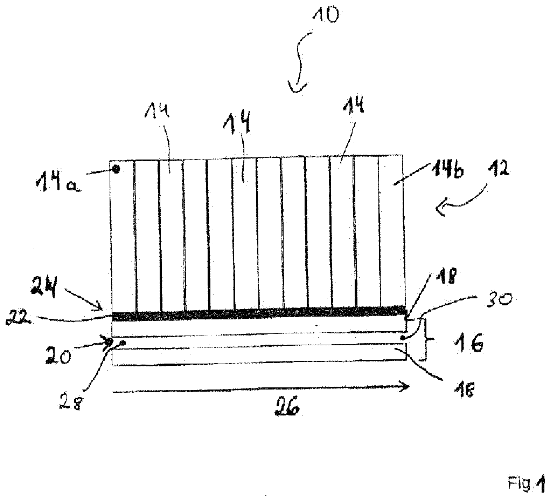

Die Figur 1 zeigt in schematischer Schnittdarstellung eine Energiespeichervorrichtung 10 gemäß einem Ausführungsbeispiel der vorliegenden Erfindung. Die Energiespeichervorrichtung 10 weist einen Energiespeicher 12 mit Zellen 14, beispielsweise Batteriezellen 14 oder Akkumulatorzellen 14, und eine Temperiereinrichtung 16, die zumindest eine Temperierplatte aufweist oder ausbildet, auf. Die Temperierplatte 18 ist insbesondere in Form einer Kühlplatte 18 ausgeführt. Die Temperierplatte 18 weist zumindest einen Strömungskanal 20 und eine zwischen den Zellen 14 und der Temperierplatte 18 angeordneten thermischen Übergangsvorrichtung 22 auf. Die Zellen 14 können hierbei auf einer nicht dargestellten Endplatte oder einem Boden angeordnet sein.

Die Zellen 14 sind nebeneinander auf einer Oberfläche 24 der Übergangsvorrichtung 22 angeordnet. Im Betrieb der Energiespeichervorrichtung 10 kann ein Fluid durch den Strömungskanal 20 der Temperiereinrichtung oder -platte 18, insbesondere der Kühlplatte 18, strömen. Eine Strömungsweglänge oder Strömungsrichtung des Fluids zwischen einem Eintritt 28 und einem Austritt 30 des Strömungskanals 20 ist durch einen Pfeil 26 gekennzeichnet. Am Eintritt 28 weist das Fluid eine Temperatur T_{Fluidein} auf. Am Austritt 30 weist das Fluid eine Temperatur T_{Fluidaus} auf. Eine dem Eintritt 28 am nächsten gelegene Batteriezelle 14a weist eine Temperatur T_{Zelleein} auf. Eine dem Austritt 30 am nächsten gelegene Batteriezelle 14b weist eine Temperatur T_{Zelleaus} auf.

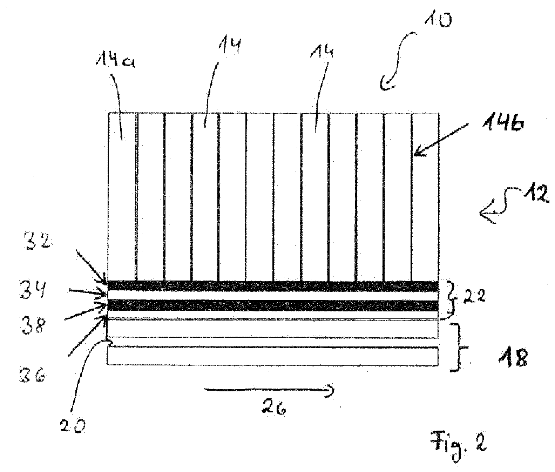

Der Aufbau der Übergangsschicht 22 ist in Figur 2 näher erläutert. Die Figur 2 zeigt eine schematische Darstellung eines weiteren Ausführungsbeispiels der Energiespeichervorrichtung 10. Die Übergangsvorrichtung 22 weist eine erste Schicht 32 und eine zweite Schicht 34 auf. Die erste Schicht 32 ist inkompressibel und als eine Toleranzausgleichsschicht 32 ausgebildet. Die zweite Schicht 34 ist als eine thermische Isolationsschicht 34 ausgebildet. Zusätzlich weist die Energiespeichervorrichtung 10 in der in Figur 2 dargestellten Ausführungsform eine dritte Schicht 36 auf, die als elektrische Isolationsschicht 36 ausgebildet ist. Auch weist die Energiespeichervorrichtung 10 eine vierte Schicht 38 auf, die als Heizschicht 38 ausgebildet ist.

Die erste Schicht 32, die zweite Schicht 34, die dritte Schicht 36 und die vierte Schicht 38 werden als funktionale Schichten bezeichnet, da jede der Schichten 32, 34, 36 und 38 eine spezifische Funktion aufweist. Die funktionalen Schichten 32, 34, 36 und 38 sind übereinandergestapelt angeordnet, wobei sich benachbart angeordnete Schichten 32, 34, 36 und 38 jeweils berühren. Die elektrische Isolationsschicht 36 ist direkt angrenzend zu der Temperiereinrichtung 18, Temperierplatte 18 oder Kühlplatte 18 angeordnet. Die Toleranzausgleichsschicht 32 ist direkt angrenzend zu den Zellen 14 angeordnet. Bei dem in Figur 2 gezeigten Schichtaufbau der Übergangsvorrichtung 22 handelt es sich um einen möglichen Schichtaufbau, der nicht maßstäblich dargestellt ist. Auch kann eine Reihenfolge der Schichten 32, 34, 36, 38 geändert sein. Auch können einzelne der Schichten 32, 34, 36, 38 entfallen oder durch andere geeignete Schichten ersetzt oder ergänzt werden.

Die in den Figuren 1 und 2 gezeigte Übergangsvorrichtung 22 weist die nachfolgend aufgeführten Funktionen auf. Die erste Schicht 32, die als Toleranzausgleichsschicht 32 dient, weist ein inkompressibles Material auf. Das Material der ersten inkompressiblen Schicht 32 weist hierbei einen Wärmeleitkoeffizienten im Bereich von ungefähr 1 W/mK bis ungefähr 3,5 W/mK auf. Das Material der ersten inkompressiblen Schicht 32 ist hierbei bevorzugt ein Duroplast. Der Duroplast ist beispielsweise hergestellt durch ein temporär flüssiges oder fluides Material, das aushärtbar ist. Das temporär flüssige Material kann auf die Kühlplatte 18 aufgebracht werden und dann aushärten. Das Aushärten kann hierbei aktiviert durch eine Temperaturerhöhung oder durch einen chemischen Aktivator erfolgen. Die Aktivierung beinhaltet dabei bevorzugt eine chemische Reaktion. Bevorzugt ist das Material der ersten Schicht ein Gießharz, insbesondere ein ZweiKomponenten Gießharz, welches nach dem Mischen einer ersten Komponente und einer zweiten Komponente, eine Vernetzung in Gang setzt und aushärtet. Das Material der ersten Schicht 32 ist hierbei bevorzugt auf Polyurethanbasis gebildet.

Die erste inkompressible Schicht 32 gleicht die Unebenheiten mit Tälern und Hügeln, die in den technischen Oberflächen der Zellen 14 und/oder der Kühlplatte 18 vorhanden sind, aus und hat somit die Wirkung einer Toleranzausgleichsschicht. Der Ausgleich erfolgt hierbei, indem das Material der ersten inkompressiblen Schicht 32, wenn es in dem temporär flüssigen oder zumindest viskosen Zustand ist, in die Täler gelangen kann. Somit wird jeweils ein Tal gefüllt, die Unebenheit der Oberfläche ausgeglichen, da die mit Material der ersten Schicht 32 gefüllten Täler und die Hügel eine Ebene ausbilden können. Dadurch ist die Anlagefläche zwischen der Oberfläche der Kühlplatte 18 und der jeweiligen Zelle 14 vergrößert. Insbesondere nach dem Aushärten ist die erste Schicht 32 unveränderbar inkompressibel und kann ihre Gestalt, insbesondere ihre Dicke, nicht mehr verändern. Die Dicke der ersten Schicht 32 ist hierbei die Ausdehnung zwischen der Temperiereinrichtung 18 und der jeweiligen Zelle 14.

Die zweite Schicht 34 dient als thermische Isolationsschicht 34. Die thermische Isolationsschicht 34 gleicht eine ungleichmäßige Temperaturverteilung, die in den einzelnen Zellen 14 auftreten kann, aus. Dies erfolgt dadurch, dass der thermische Wärmeübergang zwischen der Temperiereinrichtung oder Kühlplatte 18 und der jeweiligen Zelle 14 gehemmt wird. Die Wärmeleitfähigkeit der zweiten Schicht 34 beträgt hierbei zwischen 0,05 und 0,6 W/mK, insbesondere 0,2 W/mK. Die ideale Dicke der zweiten Schicht 34 beträgt hierbei zwischen 50 µm und 300 µm, insbesondere 150 µm. Dabei sind die Dicke der zweiten Schicht 34 und der materialbedingte Wärmedurchgangskoeffizient, der auch als Wärmeleitfähigkeit bezeichnet wird, sich gegenseitig beeinflussende Parameter. Eine große Schichtdicke und ein großer Wärmeleitkoeffizient pro Längeneinheit können zu demselben Wärmewiderstand führen, wie eine geringere Schichtdicke mit einem Material mit einem etwas geringeren Wärmeleitkoeffizient pro Längeneinheit. Insgesamt gilt, je schlechter die Wärmeleitfähigkeit des Materials der thermischen Isolationsschicht 34 ist, desto dünner kann die Schichtdicke sein.

Die zweite Schicht 34 ist bevorzugt nicht als Schicht mit einem homogenen Wärmewiderstand aufgebaut, sondern weist Bereiche mit unterschiedlichem Wärmewiderstand auf. Beispielsweise kann die zweite Schicht 34 einen ersten Bereich mit einem ersten Wärmewiderstand und einen zweiten Bereich mit einem zweiten Wärmewiderstand aufweisen. Der erste und der zweite Wärmewiderstand sind hierbei verschieden. Der erste Bereich und der zweite Bereich sind hierbei beispielsweise in Form von sich kontinuierlich verändernden Bereichen ausgebildet. Beispielsweise in Form von Bereichen mit in Strömungsrichtung 26 variablen Flächenanteilen, beispielsweise mit lateral zunehmenden Flächenanteilen, beispielsweise in Form von Keilen, die in Strömungsrichtung 26 des Fluids gesehen eine steigende Breite aufweisen. Alternativ kann die zweite Schicht 34 auch aus Streifen oder anderen geometrischen Formen von Material mit unterschiedlichen Breiten oder Materialdicken aufgebaut sein. Hierbei kann sich auch der Abstand der Formen entlang der Strömungsrichtung 26 verändern.

Beispiele für unterschiedliche Ausführungsformen zur Ausgestaltung der zweiten Schicht 34 sind der Druckschrift DE 10211084002 A1 der Anmelderin zu entnehmen, deren Offenbarungsinhalt hiermit vollumfänglich zum Offenbarungsinhalt die vorliegende Patentanmeldung gehört.

Insbesondere kann die zweite Schicht 34, insbesondere die thermische Isolationsschicht 34, einen ersten Abschnitt und einen zweiten Abschnitt mit jeweils unterschiedlichem Wärmewiderstand aufweisen, wobei sich der Wärmewiderstand vom ersten Abschnitt und vom zweiten Abschnitt kontinuierlich ändert oder sich über zumindest einen Zwischenabschnitt diskret oder abgestuft ändert. Hierbei nimmt der Wärmewiderstand der thermischen Isolationsschicht 34 entlang und/oder quer zu der Strömungsrichtung 26, die die Haupterstreckungsrichtung der Energiespeichervorrichtung 10 ist, zu oder ab. Dadurch sind die lokal unterschiedlichen Temperaturen der Kühlplatte 18 ausgleichbar. Diese unterschiedlichen Temperaturen in der Kühlplatte 18 können durch die Strömungsverläufe des Fluids entstehen. Der Wärmewiderstand ist bevorzugt abschnittsweise durch den Flächenanteil der thermischen Isolationsschicht 34 relativ zu einem Abschnitt der Oberfläche der Temperierplatte 18, insbesondere Kühlplatte 18, vorgegeben.

Das Verfahren zur Herstellung einer Energiespeichervorrichtung 10 umfasst neben der Herstellung der einzelnen Komponenten, wie Zellen 14 und Temperiereinrichtung 18, das Aufbringen der ersten inkompressiblen Schicht 32 auf die Oberfläche der Temperiereinrichtung 18, die den Zellen 14 zugewandt ist. Ferner ist bevorzugt das Aufbringen der zweiten Schicht 34 auf die Oberfläche der Temperiereinrichtung 18, die den Zellen 14 zugewandt ist, vorgesehen. Alternativ kann die erste Schicht 32 und/oder die zweite Schicht 34 auch auf eine Endplatte des Energiespeichers 12, auf dem die Zellen 14 angeordnet sind, aufgebracht werden. Hierbei wird die erste Schicht 32 und/oder die zweite Schicht 34 bevorzugt mittels Siebdruckverfahrens aufgebracht werden.

Die Energiespeichervorrichtung 10 weist als Zellen 14 des Energiespeichers 12 bevorzugt Batteriezellen oder Zellen eines Akkumulators auf. Die Energiespeichervorrichtung 10 ist bevorzugt in einem Hybrid- oder E-Kraftfahrzeug eingebaut.

## Patentansprüche

1. Energiespeichervorrichtung (10), welche mindestens einen Energiespeicher (12, 14a, 14b, 14) und mindestens eine Temperiereinrichtung (18) aufweist und einen thermischen Übergang zwischen der Temperiereinrichtung (18) und dem Energiespeicher (12, 14a, 14b, 14) bewirkt, mit einer Übergangsvorrichtung, wobei die Übergangsvorrichtung (22) zwischen dem Energiespeicher (12, 14a, 14b, 14) und der Temperiereinrichtung (18) angeordnet ist, **dadurch gekennzeichnet, dass** die Übergangsvorrichtung zumindest eine Toleranzausgleichsschicht (32) aufweist, welche eine erste inkompressible Schicht (32) aufweist, wobei die erste inkompressible Schicht (32) ein ausgehärtetes Material aufweist und die erste inkompressible Schicht (32) eine Wärmeleitfähigkeit zwischen 1 und 3,5 W/mK aufweist.

2. Energiespeichervorrichtung (10) nach Anspruch 1, **dadurch gekennzeichnet, dass** die erste inkompressible Schicht (32) ein Duroplast aufweist oder aus einem Duroplasten besteht.

3. Energiespeichervorrichtung (10) nach einem der vorhergehenden Ansprüche, **dadurch gekennzeichnet, dass** die Übergangsvorrichtung (22) eine zweite Schicht (34) aufweist, welche als thermische Isolationsschicht dient.

4. Energiespeichervorrichtung (10) nach Anspruch 3, **dadurch gekennzeichnet, dass** die zweite Schicht (34) eine Materialstärke zwischen 50 µm und 300 µm, insbesondere von 150 µm, aufweist.

5. Energiespeichervorrichtung (10) nach einem der vorhergehenden Ansprüche 3 oder 4, **dadurch gekennzeichnet, dass** die Wärmeleitfähigkeit der zweiten Schicht (34) zwischen 0,05 und 0,6 W/mK, insbesondere 0,2 W/mK, beträgt.

6. Energiespeichervorrichtung (10) nach einem der vorhergehenden Ansprüche 3 bis 5, **dadurch gekennzeichnet, dass** die zweite Schicht (34) einen ersten Bereich mit einem ersten mittleren Wärmewiderstand und einen zweiten Bereich mit einem zweiten mittleren Wärmewiderstand aufweist, wobei der erste Wärmewiderstand ungleich dem zweiten Wärmewiderstand ist.

7. Energiespeichervorrichtung (10) nach einem der vorhergehenden Ansprüche 3 bis 6, **dadurch gekennzeichnet, dass** die zweite Schicht (34) einen ersten Bereich mit einer ersten Materialstärke und mindestens einen zweiten Bereich mit einer zweiten Materialstärke aufweist, wobei die erste Materialstärke ungleich der zweite Materialstärke ist.

8. Energiespeichervorrichtung (10) nach Anspruch 6 oder 7, **dadurch gekennzeichnet, dass** der Übergang von einem ersten Bereich zu einem zweiten Bereich kontinuierlich verändert oder abgestuft erfolgt.

9. Energiespeichervorrichtung (10) nach einem der vorhergehenden Ansprüche 3 bis 8, **dadurch gekennzeichnet, dass** der Wärmewiderstand der Isolationsschicht entlang oder quer zu einer Haupterstreckungsrichtung der Temperiereinrichtung (18) zunimmt oder abnimmt.

10. Energiespeichervorrichtung (10) nach einem der vorhergehenden Ansprüche 3 bis 9, **dadurch gekennzeichnet, dass** der Wärmewiderstand abschnittweise durch den Flächenanteil der thermischen Isolationsschicht relativ zu einem Temperiereinrichtungsoberflächenabschnitt vorgegeben ist.

11. Energiespeichervorrichtung (10) nach einem der vorhergehenden Ansprüche, **dadurch gekennzeichnet, dass** die Temperiereinrichtung (18) eine elektrische Heizschicht aufweist, die benachbart zu der ersten Schicht oder zu der zweiten Schicht angeordnet ist.

12. Energiespeichervorrichtung (10) nach einem der Ansprüche 1 bis 11, mit einem Energiespeicher (12, 14a, 14b, 14) und einer Temperiereinrichtung (18), wobei zwischen dem Energiespeicher (12, 14a, 14b, 14) und der Temperiereinrichtung (18) eine Übergangsvorrichtung (22) angeordnet ist.

13. Verfahren zur Herstellung einer Energiespeichervorrichtung (10) nach Anspruch 12 mit den Schritten:
- Anordnen einer Temperierplatte (18) beabstandet zu einer Endplatte des Energiespeichers (12);
- Auftragen einer ersten inkompressiblen Schicht (32) aus einer aushärtbaren Substanz auf die Temperierplatte (18) oder die Endplatte;
- Aushärten der aushärtbaren Substanz der ersten inkompressiblen Schicht (32).

## Claims

1. An energy storage device (10), which has at least one energy store (12, 14a, 14b, 14) and at least one temperature-control device (18) and brings about a thermal transition between the temperature-control device (18) and the energy store (12, 14a, 14b, 14), with a transition apparatus, wherein the transition apparatus (22) is disposed between the energy store (12, 14a, 14b, 14) and the temperature-control device (18), **characterised in that** the transition apparatus has at least one tolerance compensation layer (32) which has a first incompressible layer (32), wherein the first incompressible layer (32) has a cured material and the first incompressible layer (32) has a thermal conductivity between 1 and 3.5 W/mK.

2. The energy storage device (10) according to claim 1, **characterised in that** the first incompressible layer (32) has a thermosetting plastic or consists of a thermosetting plastic.

3. The energy storage device (10) according to one of the preceding claims, **characterised in that** the transition apparatus (22) has a second layer (34), which serves as a thermal insulation layer.

4. The energy storage device (10) according to claim 3, **characterised in that** the second layer (34) has a material thickness between 50 µm and 300 µm, in particular of 150 µm.

5. The energy storage device (10) according to one of the preceding claims 3 or 4, **characterised in that** the thermal conductivity of the second layer (34) is between 0.05 and 0.6 W/mK, in particular 0.2 W/mK.

6. The energy storage device (10) according to one of the preceding claims 3 to 5, **characterised in that** the second layer (34) has a first area with a first average thermal resistance and a second area with a second average thermal resistance, wherein the first thermal resistance is not the same as the second thermal resistance.

7. The energy storage device (10) according to one of the preceding claims 3 to 6, **characterised in that** the second layer (34) has a first area with a first material thickness and at least one second area with a second material thickness, wherein the first material thickness is not the same as the second material thickness.

8. The energy storage device (10) according to claim 6 or 7, **characterised in that** the transition from a first area to a second area changes continuously or occurs in steps.

9. The energy storage device (10) according to one of the preceding claims 3 to 8, **characterised in that** the thermal resistance of the insulation layer increases or decreases along or transverse to a main extension direction of the temperature-control device (18) .

10. The energy storage device (10) according to one of the preceding claims 3 to 9, **characterised in that** the thermal resistance is predetermined in sections by the area proportion of the thermal insulation layer relative to a temperature-control device surface section.

11. The energy storage device (10) according to one of the preceding claims, **characterised in that** the temperature-control device (18) has an electrical heating layer, which is disposed adjacent to the first layer or to the second layer.

12. The energy storage device (10) according to one of claims 1 to 11, with an energy store (12, 14a, 14b, 14) and a temperature-control device (18), wherein a transition apparatus (22) is arranged between the energy store (12, 14a, 14b, 14) and the temperature-control device (18).

13. A method for producing an energy storage device (10) according to claim 12, comprising the steps:
- arranging a temperature-control plate (18) spaced apart from an end plate of the energy store (12);
- applying a first incompressible layer (32) of a curable substance to the temperature-control plate (18) or the end plate;
- curing the curable substance of the first incompressible layer (32).

## Revendications

1. Dispositif accumulateur d'énergie (10), lequel dispositif présente au moins un accumulateur d'énergie (12, 14a, 14b, 14) et au moins un dispositif d'équilibrage de température (18) et provoque un transfert thermique entre le dispositif d'équilibrage de température (18) et l'accumulateur d'énergie (12, 14a, 14b, 14), comprenant un dispositif de transfert, où le dispositif de transfert (22) est disposé entre l'accumulateur d'énergie (12, 14a, 14b, 14) et le dispositif d'équilibrage de température (18), **caractérisé en ce que** le dispositif de transfert présente au moins une couche de compensation de tolérances (32) qui présente une première couche incompressible (32), où la première couche incompressible (32) présente un matériau durci, et la première couche incompressible (32) présente une conductivité thermique comprise entre 1 W/mK et 3,5 W/mK.

2. Dispositif accumulateur d'énergie (10) selon la revendication 1, **caractérisé en ce que** la première couche incompressible (32) présente un Duroplast ou bien se compose d'un Duroplast.

3. Dispositif accumulateur d'énergie (10) selon l'une des revendications précédentes, **caractérisé en ce que** le dispositif de transfert (22) présente une deuxième couche (34) qui sert de couche d'isolation thermique.

4. Dispositif accumulateur d'énergie (10) selon la revendication 3, **caractérisé en ce que** la deuxième couche (34) présente une épaisseur de matériau comprise entre 50 µm et 300 µm, en particulier égale à 150 µm.

5. Dispositif accumulateur d'énergie (10) selon l'une des revendications précédentes 3 ou 4, **caractérisé en ce que** la conductivité thermique de la deuxième couche (34) est comprise entre 0,05 W/mK et 0,6 W/mK, en particulier égale à 0,2 W/mK.

6. Dispositif accumulateur d'énergie (10) selon l'une quelconque des revendications précédentes 3 à 5, **caractérisé en ce que** la deuxième couche (34) présente une première zone ayant une première résistance thermique moyenne et présente une deuxième zone ayant une deuxième résistance thermique moyenne, où la première résistance thermique est différente de la deuxième résistance thermique.

7. Dispositif accumulateur d'énergie (10) selon l'une quelconque des revendications précédentes 3 à 6, **caractérisé en ce que** la deuxième couche (34) présente une première zone ayant une première épaisseur de matériau et présente au moins une deuxième zone ayant une deuxième épaisseur de matériau, où la première épaisseur de matériau est différente de la deuxième épaisseur de matériau.

8. Dispositif accumulateur d'énergie (10) selon la revendication 6 ou 7, **caractérisé en ce que** le transfert se produisant depuis une première zone jusqu'à une deuxième zone se modifie de façon continue ou bien a lieu de façon graduelle.

9. Dispositif accumulateur d'énergie (10) selon l'une quelconque des revendications précédentes 3 à 8, **caractérisé en ce que** la résistance thermique de la couche d'isolation augmente ou diminue le long d'une direction d'étendue principale du dispositif d'équilibrage de température (18), ou bien de manière transversale par rapport à ladite direction.

10. Dispositif accumulateur d'énergie (10) selon l'une quelconque des revendications précédentes 3 à 9, **caractérisé en ce que** la résistance thermique est prédéterminée en partie par la proportion de surface de la couche d'isolation thermique, par rapport à une portion de surface du dispositif d'équilibrage de température.

11. Dispositif accumulateur d'énergie (10) selon l'une quelconque des revendications précédentes, **caractérisé en ce que** le dispositif d'équilibrage de température (18) présente une couche chauffante électrique qui est disposée en étant adjacente à la première couche ou à la deuxième couche.

12. Dispositif accumulateur d'énergie (10) selon l'une quelconque des revendications 1 à 11, ledit dispositif comprenant un accumulateur d'énergie (12, 14a, 14b, 14) et un dispositif d'équilibrage de température (18), où un dispositif de transfert (22) est disposé entre l'accumulateur d'énergie (12, 14a, 14b, 14) et le dispositif d'équilibrage de température (18).

13. Procédé de fabrication d'un dispositif accumulateur d'énergie (10) selon la revendication 12, ledit procédé comprenant les étapes consistant :
- à disposer une plaque d'équilibrage de température (18) de manière espacée par rapport à une plaque d'extrémité de l'accumulateur d'énergie (12) ;
- à appliquer sur la plaque d'équilibrage de température (18) ou sur la plaque d'extrémité, une première couche incompressible (32) se composant d'une substance durcissable ;
- à durcir la substance durcissable de la première couche incompressible (32).
